# EUROPÄISCHE PATENTSCHRIFT

(11) **EP 0 956 765 B1**
(45) Veröffentlichungstag und Bekanntmachung des Hinweises auf die Patenterteilung: **12.09.2001**
(21) Anmeldenummer: 99890143.3
(22) Anmeldetag: 04.05.1999
(51) Int. Cl.: A01K 5/02

(54) **Verfahren zur dosierten Abgabe von Futter an mehrere Abgabestellen**
Installation for the dosed delivery of feed to a plurality of delivery points
Installation pour le dosage et la distribution d'un mélange alimentaire dans des récipients différents

(30) Priorität: 13.05.1998 AT 81798
(43) Veröffentlichungstag der Anmeldung: 17.11.1999
(73) Patentinhaber: Vogl, Gerhard, Dipl.-Ing., A-4070 Eferding (AT)
(72) Erfinder: Vogl, Gerhard, Dipl.-Ing., A-4070 Eferding (AT)
(74) Vertreter: Hübscher, Helmut, Dipl.-Ing.

(56) Entgegenhaltungen:
- DE-A- 3 317 467
- FR-A- 2 574 623

## Beschreibung

Die Erfindung betrifft ein Verfahren nach dem Oberbegriff des Patentanspruches 1.

Bekannte Verfahren der gegenständlichen Art erfüllen zwar manche, aber nicht alle an eine allen Bedingungen entsprechende Fütterungsanlage zu stellenden Anforderungen.

Aus der FR 2 574 623 A ist es bekannt, Flüssigfutter, nämlich einen sogenannten Kleietrank, mittels einer Förderpumpe portionsweise in die Förderleitung einzupumpen und dann diese Futterportion durch in die Leitung über ein Rückschlagventil eingeblasene Druckluft zu einem freigegebenen Auslaß zu fördern. Hier kann nur eine bestimmte Flüssigfuttermischung verwendet werden, so daß die Anforderungen für eine allgemeine Anwendung des Verfahrens bei verschiedenen Futtersorten und verschiedene Futtermischungen für verschiedene Tiere nicht erfüllt sind. Das Flüssigfutter bildet praktisch einen aus jeweils einer Futterportion bestehenden Pfropfen in der Förderleitung, der mittels der Druckluft weitergeschoben und schließlich am freigegebenen Auslaß austritt. Dabei läßt sich wegen des notwendigen, relativ hohen Förderdruckes ein Spritzen des Futters an der Abgabestelle nicht vermeiden. Wenigstens theoretisch kann auch breiförmiges Futter eingesetzt werden. Probleme ergeben sich bei manchen Futtersorten durch aus Futterresten gebildete Ablagerungen in der Leitung, wobei bei diesem bekannten Verfahren keine Möglichkeit zu einer nachträglichen einwandfreien Reinigung von Leitung und Abgabestellen vorhanden ist.

Viele Anforderungen, die an ein Abgabeverfahren zu stellen sind, werden nach der EP 0 373 147 B dadurch erfüllt, daß nur die trockenen Besstandteile des Futters portionsweise zu den Abgabestellen geblasen und dort in eigenen Mischern mit Wasser oder einer sonstigen Flüssigkeit zu einem flüssigen oder breiförmigen Futter aufbereitet werden. Eine Förderung fetthaltiger Stoffe als Futterbestandteil ist mit diesem Verfahren nicht möglich. Der Hauptnachteil besteht aber in der Notwendigkeit, an jeder Abgabestelle eigene Mischer und Einrichtungen zur geregelten Flüssigkeitszufuhr vorzusehen. Alle anderen bekannten Verfahren erfüllen die gestellten Anforderungen nur zu einem wesentlich geringeren Teil. Als Beispiel sei hier das Verfahren nach der EP 0 595 784 B genannt, bei dem verschiedene Futtermischungen mittels nachdrückender Druckluft von zwei Seiten her zu freigegebenen Auslässen gefördert werden. Dabei sind zwar verschiedene Futterrezepturen und Futtermengen für die einzelnen Abgabestellen möglich, doch kann breiförmiges Futter nicht gefördert werden und es ist wieder notwendig, Maßnahmen gegen ein zu starkes Spritzen des Futters bei der Endabgabe zu setzen, also etwa Luftabscheider an der Abgabestelle vorzusehen.

Nach der EP 696 420 B wird zunächst Flüssigfutter mittels einer Förderpumpe in der Förderleitung zu einzeln freigebbaren Auslässen gepumpt. Nach der erstmaligen Leerung des oder der Vorrats- oder Mischbehälter wird in die Förderleitung Wasser gepumpt und mit seiner Hilfe der Futterrest zu weiteren Auslässen gefördert. Nach Abgabe des gesamten Futters wird das nur als Fördermittel verwendete Wasser durch Einblasen von Druckluft in den Mischbehälter zurückgedrückt und dort bei der Zubereitung des nächsten Mischfuttervorrates verwendet. Beliebig dickes Breifutter kann nicht eingesetzt werden. Fetthalige Stoffe in der Futtermischung führen zu Ablagerungen, die sich auch durch das nachdrückende Wasser bzw. das Einblasen der Luft nicht voll beseitigen lassen. Weitere Probleme ergeben sich, wenn Futtermengen abzugeben sind, deren Volumen kleiner als das Gesamtvolumen der Förderleitung ist.

Vorrichtungen nach der DE 12 03 041 C und der US 3 494 331 A arbeiten grundsätzlich nur mit Trockenfutter, das aber nicht unmittelbar abgegeben, sondern an den Entnahmestellen in Vorratsbehältern gespeichert wird, die erst nach der ausreichenden Füllung über eine Steuervorrichtung nacheinander geöffnet werden. Es ist daher keine Dosierung von der Abgabestelle, also einem Mischbehälter her, möglich, sondern die Dosierung erfolgt als Mengendosierung nach dem Füllstand des Vorratsbehälters.

Der Grundgedanke, verschiedene Materialien mit Luft zu einem quasi homogenen Gemisch aufzubereiten, ist zwar Gegenstand der DE 33 17 467 A, doch wird dort mit einem äußerst aufwendigen, für Fütterungsanlagen mit Dosiereinrichtung grundsätzlich unbrauchbaren System gearbeitet, bei dem im Zuge eines Förderrohres Luftströmungen mit verschiedener Geschwindigkeit und teilweise sogar in verschiedenen Richtungen erzeugt werden. Durch diese Maßnahmen soll entlang der Wandung des erwähnten Förderrohres eine laminare Strömung aus unter niedrigem Druck stehender Luft erzeugt werden, die das Auftreffen des Materials auf die Wandung verhindert, wobei das Material selbst mit unter höherem Druck stehender Luft aufbereitet und gefördert wird. Es ergeben sich durch alle diese Maßnahmen zwangsweise Förderrohre mit großem Durchmesser, aufwendige Beschickungs- bzw. Drucklufterzeuger und komplizierte Regler.

Aufgabe der Erfindung ist es demnach, ein Verfahren anzugeben, das die Nachteile bzw. Einschränkungen der bekannten Verfahren vermeidet und bei einem möglichen einfachen Aufbau der zu seiner Durchführung verwendeten Fütterungsanlage folgende Bedingungen erfüllt: Es soll jeder Futterstelle das Futter in richtiger Menge und Zusammensetzung portionsweise zuführbar sein. Das Verfahren soll sich unter Verwendung einfacher Anlagen und Regeleinrichtungen auch für die Verteilung von beliebig dickem Breifutter und sogar für Futter mit fetthaltigen Stoffen eignen, es sollen keine Reste in der Anlage bleiben, ein Ausspritzen des Futters bei der Abgabe ist zu vermeiden und schließlich soll im Bedarfsfall auch die Möglichkeit bestehen, bei einer ad-libitum-Fütterung die neuerliche Zuteilung einer Futterportion an die Abgabestelle des entsprechenden Freßplatzes davon abhängig zu machen, daß dort schon die gesamte oder ein vorbestimmter Teil der vorher zugeteilten Futtermenge verbraucht ist.

Die gestellte Hauptaufgabe wird durch das Verfahren nach dem Patentanspruch 1 gelöst.

Das Futter-Luftgemisch hat naturgemäß ein größeres Volumen als der eingesetzte Futterbrei bzw. das zugeführte Flüssigfutter und damit ein geringes Volumsgewicht. Entscheidend ist aber, daß das Gemisch sich bei richtiger Aufbereitung in der Rohrleitung wesentlich leichter als Flüssigfutter bzw. ein Futterbrei weiterbefördern läßt, wobei ein Großteil der zur Förderung verwendeten Luft bereits im Futter-Luftgemisch enthalten ist. Dabei findet man mit niedrigeren Förderdrücken als bei den bisherigen Verfahren das Auslangen und das an der Abgabestelle austretende Futter-Luftgemisch neigt von sich aus und auch wegen des niedrigeren Abgabedruckes kaum zum Spritzen. Die Förderluft wird wenigstens zum Großteil an der Abgabestelle selbsttätig abgeschieden. Überraschend hat sich gezeigt, daß bei ausreichender Aufbereitung des Futter-Luftgemisches auch fetthaltige Stoffe leichter transportiert werden können und nicht mehr zur Bildung von Ablagerungen in der Förderleitung neigen. Bei kompakterem Futter wird man einen größeren Luftanteil im Futter-Luftgemisch wählen. Die Fördergeschwindigkeit der Eintragvorrichtung und die Strömungsgeschwindigkeit der Luft bestimmen hier im wesentlichen die Konsistenz des Futter-Luftgemisches, wobei diese Konsistenz durch Änderung der genannten Faktoren verändert und damit auch eingestellt werden kann. Die Einstellung der Konsistenz des Futter-Luftgemisches durch Überwachung des Druckes in der Förderleitung und Regelung der Fördergeschwindigkeit der Eintragsvorrichtung auf Einhaltung vorwählbarer Toleranzwerte für diesen Druck ist trotz der Einfachheit voll betriebssicher. Wenn es nämlich durch irgendwelche Fehlbedienungen oder sonstige Faktoren zu einem zu geringen Luftzusatz zum Futter, also zur Förderung zu großer Futtermengen in der Zeiteinheit bzw. zu dichter Brocken der Futtermischung kommen, so erhöht sich der Druck an der Meßstelle in der Leitung und der Regler wird das Eintragen des Futters drosseln oder sogar stoppen, bis wieder zulässige Werte für den Druck und damit eine transportfähige Konsistenz der Futter-Luftmischung erreicht sind. Da Ablagerungen weitgehend vermieden werden, lassen sich die Förderleitung und die Abgabestellen einfach durch unter Bildung eines Sprühnebels in den Luftstrom eingespritztes Wasser reinigen.

Bei dem Verfahren nach Anspruch 2 kann im wesentlichen der gesamte Futtervorrat aus Trockenfutter bestehen, das individuell zu den einzelnen Futterportionen gemischt wird. Vielfach wird man auch den Großteil des Futtervorrates als flüssiges oder breiförmiges Futter herstellen und nur spezielle Zusätze, insbesondere aus hochwertigem und gegen feuchte Lagerung empfindlichem Futter, in trockenem Zustand zu den Zusätzen zu den Einzelportionen vorbereiten und dann benetzen. Dabei kann man im Zuführungsweg der Eintragsvorrichtung Benetzungseinrichtungen für das trockene Futter vorsehen. Es ist aber auch möglich, die Benetzung erst im Zuge der Förderung in der Förderleitung vorzunehmen und dabei durch die Drucklufteinwirkung zu unterstützen.

Das erfindungsgemäße Verfahren ist, wie schon vorstehend erwähnt, auch an Fütterungsanlagen oder Teile von Fütterungsanlagen, die eine ad-libitum-Fütterung vorsehen, anpaßbar. Erfindungsgemäß wird hier nach Anspruch 3 gearbeitet. Selbstverständlich können nach völliger Entleerung des Troges über eine Programmsteuereinrichtung vorgebbare Pausen bis zur Abgabe der nächsten Futterportion eingestellt werden.

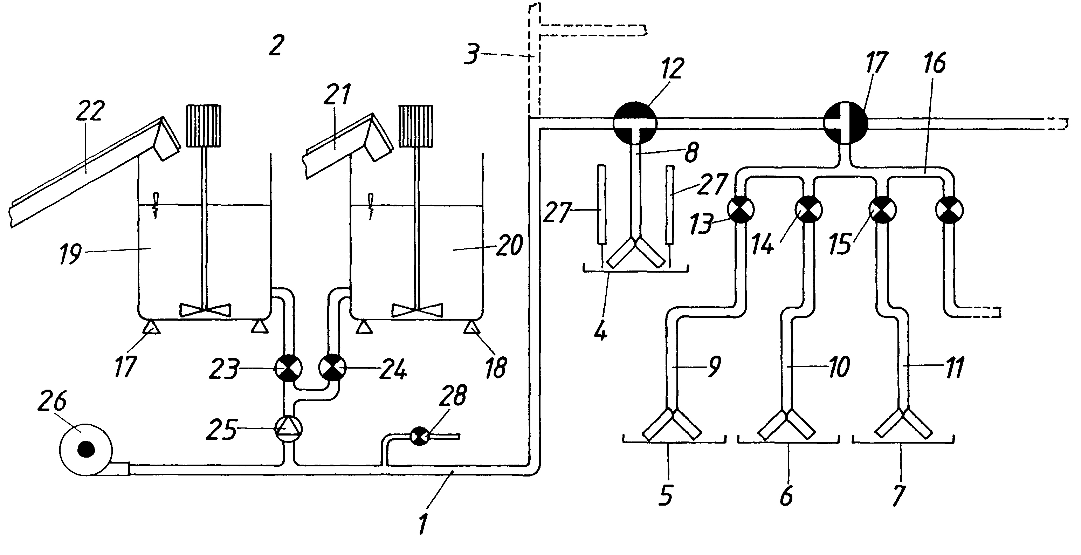

Weitere Einzelheiten und Vorteile des Erfindungsgegenstandes entnimmt man der nachfolgenden Zeichnungsbeschreibung. In der Zeichnung ist eine zur Durchführung des erfindungsgemäßen Verfahrens geeignete Fütterungsanlage beispielsweise im Schema veranschaulicht.

Die Fütterungsanlage besitzt eine gegebenenfalls auch als Ringleitung ausführbare Förderleitung 1, die von einer Mischstation 2 in einen Stall führt, wobei über strichpunktiert angedeutete Abzweiger 3 auch weitere Ställe bedient werden können. Im Stall befinden sich mehrere Abgabestellen, die als mit Endverzweigungen in Futtertrögen 4, 5, 6, 7 mündende Leitungen 8, 9, 10, 11 angedeutet wurden. Die Leitung 8 ist über ein Dreiwegeventil 12 an die Förderleitung 1 angeschlossen. Die Leitungen 9, 10, 11 sind über gesondert betätigbare Absperrorgane 13, 14, 15 mit einem Verteiler 16 verbunden, der wieder über ein Dreiwegeventil 17 an die Förderleitung anschließt. Das Dreiwegeventil 17 könnte auch durch ein dem Anschluß des Abzweigers 16 in der Förderleitung 1 nachgeordnetes Absperrorgan ersetzt werden. Den einzelnen Abgabestellen 8 - 11 sollen Futterportionen, die sich in Menge und Zusammensetzung unterscheiden können, zugeführt werden, wobei es auch möglich ist, den Abgabestellen 9 - 11 bei der Gruppenhaltung von Tieren Identifizierungseinrichtungen für von den Tieren getragene ldentifizierungsmarken zuzuordnen, so daß nach der Identifikation eines Tieres an einer Abgabestelle 9- 11 die Berechtigung des Tieres zum Futterempfang festgestellt und über eine zentrale Steuereinrichtung eine auf dieses Tier abgestimmte Futterportion abgerufen wird.

Beim Ausführungsbeispiel befinden sich in der Mischstation 2 zwei auf Wiegeeinrichtungen 17, 18 abgestützte Mischbehälter 19, 20, die über Beschickungseinrichtungen 21, 22 mit Futterzutaten und Flüssigkeit beschickt werden können. Die Auslässe dieser Mischbehälter sind über Absperrorgane 23, 24 mit einer Förderpumpe 25 oder einer Zellradschleuse verbunden, die jeweils in die Förderleitung 1 fördert. Eine Futterportion, die für die Abgabe an einer bestimmten Abgabestelle gedacht ist, kann über die Absperrorgane 23, 24 unter Beachtung der über 17, 18 festgestellten Gewichtsabnahme der Futtermischungen in den Behältern 19, 20 individuell bestimmt werden. Die Förderpumpe 25 fördert dieses Futtergemisch dosiert in einen in der Leitung 1 durch ein Gebläse oder einen Turbokompressor 26 erzeugten Luftstrom, wodurch ein im wesentlichen homogenes Futter-Luftgemisch entsteht, das je nach Stellung der Absperrorgane 12- 17 zu einer der Abgabestellen 8 - 11 gefördert wird. Ein Druckfühler in der Leitung 1 kann zusätzlich eingesetzt werden, um die Fördergeschwindigkeit der Pumpe 25 oder der entsprechenden Schleuse auf den zur Bildung des erwünschten Futter-Luftgemisches günstigsten Wert zu regeln. Dabei kann in einer Steuereinheit auch der Leitungswiderstand zur jeweils freigegebenen Abgabestelle 8-11 berücksichtigt werden.

Der Trog 4 ist für eine ad-libitum-Fütterung bestimmt. Aus diesem Grund sind im Trog 4 Trogsonden 27 angebracht, die den Füllstand und damit die aufgetretene Futterentnahme feststellen und an eine zentrale Steuereinheit weitermelden, die erst ab einem bestimmten Entleerungszustand des Troges 4 und gegebenenfalls zusätzlich ab einer danach festlegbaren Zeitspanne die Zufuhr einer frischen Futterportion zum Trog 4 freigibt.

Nach einer Ausführungsvariante kann wenigstens der eine Mischbehälter 19 oder 20 als Mischbehälter für Trockenfutter ausgebildet werden. Es müssen dann entsprechend modifizierte Absperrorgane 23, 24 und eine ebenfalls modifizierte Eintragsvorrichtung 25 Verwendung finden. Die notwendige Benetzung des Trockenfutteranteiles kann über die mit dem Absperrorgan 28 versehene Wasserleitung erfolgen. Wenn sowohl Trockenfutter als auch vorgemischtes breiförmiges Futter dosiert abgegeben werden, besteht auch eine Möglichkeit darin, z. B. den Mischbehälter 19 als Vorratsbehälter für Trockenfutter auszubilden und über eine Dosiereinrichtung und sein Absperrorgan direkt mit einer Eintragsvorrichtung in die Leitung 1 zu verbinden, wobei dann die Flüssigkeitszufuhr vor dem Einmünden des Auslasses der Eintragsvorrichtung 25 in die Leitung 1 erfolgt oder überhaupt am Förderweg zwischen dem Absperrorgan 23 und der eigenen Eintragsvorrichtung stattfindet.

Nach beendigten Fütterungsvorgang kann über eine Leitung mit dem Absperrorgan 28 Wasser in den mittels des Kompressors 26 erzeugten Luftstrom eingespritzt und dadurch ein Sprühnebel erzeugt werden, mit dem die Leitung 1 und die Auslässe 8 - 11 sowie die Tröge 4 - 7 gereinigt werden. Anschließend ist eine Trocknung durch reine Luftzufuhr möglich.

## Patentansprüche

1. Verfahren zur dosierten Abgabe von Futter an mehrere Abgabestellen (4 - 7), denen mit wenigstens einer Förderleitung (1) verbundene, einzeln freigebbare Auslässe (8 - 11) zugeordnet sind, wobei die Förderleitung (1) von einem oder mehreren Vorrats- oder Mischbehältern (19, 20) über eine Eintragsvorrichtung (25), z. B. eine Pumpe oder Kammerschleuse, mit dem jeweils freigebbaren Auslaß in Menge und Zusammensetzung zugeordneten Futterportionen beschickt und diese Futterportionen mittels in die Förderleitung (1) eingeblasener Druckluft nacheinander zu den freigegebenen Auslässen (8 - 11) gefördert werden, **dadurch gekennzeichnet, daß** aus flüssigem oder breiförmigem Futter bestehende Futterportionen in einen mittels der Druckluft in der Förderleitung (1) erzeugten, zum freigegebenen Auslaß (8 - 11) führenden Luftstrom eingetragen, dadurch zu einem im wesentlichen homogenen Futter-Luftgemisch aufbereitet und in dieser Form zum jeweils freigegebenen Auslaß (8 - 11) transportiert werden, wobei der Druck in einem das Futter-Luftgemisch fördernden Teil der Förderleitung (1) überwacht und die Fördergeschwindigkeit der Eintragsvorrichtung (25) auf Einhaltung vorwählbarer Toleranzwerte für diesen Druck, insbesondere einer Druckobergrenze, geregelt wird.

2. Verfahren nach Anspruch 1, **dadurch gekennzeichnet, daß** die Futterportionen wenigstens zum Teil aus Trockenfutter zubereitet werden, dem vor oder nach dem Eintritt in die Förderleitung (1) Flüssigkeit zugesetzt wird.

3. Verfahren nach-Anspruch 1 oder 2, **dadurch gekennzeichnet, daß** zur Regelung der Futterzuteilung zu Abgabestellen (8) für eine ad-libitum-Fütterung an diesen Abgabestellen die aufgetretene Futterentnahme über Trogsonden (27) ermittelt und erst ab einer vorgebbaren Entnahmemenge neuerlich eine Futterportion zugeführt wird.

## Claims

1. A method of metered dispensing of feed to a number of dispensing points (4 - 7), with which there are associated individually releasable outlets (8 - 11) connected to at least one delivery line (1), the latter being charged, from one or more reservoirs or mixing tanks (19, 20) via an introduction device (25), e.g., a pump or chamber sluice, with the feed portions associated in respect of quantity and composition with the respective releasable outlet and said feed portions are delivered successively to the released outlets (8-11) by means of compressed air injected into the delivery line (1), **characterised in that** feed portions consisting of liquid or pasty feed are introduced into an air stream produced by means of the compressed air in the delivery line (1) and leading to the released outlet (8 - 11), and as a result are thus prepared into the form of a substantially homogeneous mixture of feed and air and are transported in that form to the respective released outlet, the pressure in a part of the delivery line (1) which carries the mixture of air and feed being monitored and the speed of delivery of the introduction device (25) being controlled so as to maintain preselectable tolerances for said pressure, particularly a top preesure limit.

2. A method according to Claim 1, **characterised in that** the feed portions are prepared at least partly from dry feed, to which liquid is added before or after inroduction into the delivery line (1).

3. A method according to Claim 1 or 2, **characterised in that** for the purpose of controlling the feed allocation to dispensing points (8) for an ad lib feeding at these dispensing points the quantity of feed taken is detected by means of trough probes (27) and a feed portion is re-supplied only after a preselectable quantity has been taken.

## Revendications

1. Procédé de fourniture dosée d'alimentation animale en plusieurs points de distribution (4 à 7), auxquels sont associées des sorties (8 à 11) susceptibles d'être libérées individuellement, reliées à au moins une conduite de transport (1), la conduite de transport (1) venant d'un ou plusieurs réservoirs de stockage ou de mélange (19, 20), en passant par un dispositif d'introduction (25), par exemple une pompe ou un sas à chambre, étant alimentée en portions d'alimentation animale associées, en quantité et en composition, à la sortie, chaque fois libérable, et ces portions d'alimentation animale sont transportées les unes après les autres vers les sorties (8 à 11) libérées, par utilisation d'air comprimé insufflé dans la conduite de transport (1), **caractérisé par** le fait que des portions d'alimentation animale, constituées de liquide ou se présentant sous forme de pâte, sont introduites dans un écoulement d'air, menant à la sortie (8 à 11) libérée, écoulement généré dans la conduite de transport (1) à l'aide de l'air comprimé, sont de ce fait préparées pour donner un mélange air-alimentation animale pratiquement homogène et transportées sous cette forme à la sortie (8 à 11) chaque fois libérée, la pression régnant dans une partie, véhiculant le mélange air-alimentation animale, dans la conduite de transport (1) étant surveillée, et la vitesse de transport du dispositif d'introduction (25) étant régulée en vue de respecter des valeurs de tolérance pré-sélectionnables concernant cette pression, en particulier une limite supérieure de pression.

2. Procédé selon la revendication 1, **caractérisé par** le fait que les portions d'alimentation animale sont préparées, au moins en partie, à partir d'alimentation animale sèche, à laquelle un liquide est ajouté avant ou après l'entrée dans la conduite de transport (1)

3. Procédé selon la revendication 1 ou 2, **caractérisé par** le fait que, pour réguler la distribution d'alimentation animale vers les points de distribution (8), pour fournir une alimentation animale ad libitum, le prélèvement d'alimentation animale ayant été effectué est déterminé, au niveau de ces points de distribution, par l'intermédiaire de sondes d'auge (27) et une nouvelle fourniture de portion d'alimentation animale étant amenée ensuite, à partir d'un niveau de prélèvement susceptible d'être prédéterminé.
